# EUROPEAN PATENT APPLICATION

(11) **EP 4 717 851 A1**
(43) Date of publication of application: **01.04.2026**
(21) Application number: 25203042.4
(22) Date of filing: 18.09.2025
(51) Int. Cl.: E04H 6/00, B63C 15/00, E04H 6/06, E04H 6/30, E04H 6/34, B60S 13/00

(54) **OPTIMISED EQUIPMENT FOR AUTOMATICALLY PARKING A VEHICLE AND/OR VESSEL**

(30) Priority: 25.09.2024 IT 202400021328
(71) Applicant: Green Pack S.R.L., 25013 Carpenedolo BS (IT)
(72) Inventor: Poltronieri, Paolo, 25080 Padenghe Sul Garda (BS) (IT)
(74) Representative: Cipolletti, Serena

(57) **Abstract**

The Invention consists of innovative automatic equipment for parking various means of transport in a garage, such as four or two-wheeled vehicles, a small boat or a jet ski, which beneficially uses a traction element that differs from systems with drive wheels on the ground. The Invention guarantees that the parking system is functional and adaptable to any closed space, even when there is no flooring or the ground is sloping.

## Description

### Technical Field

This Invention comes under the category of equipment designed to automatically facilitate parking a vehicle with four wheels, two wheels or a small boat, especially in closed spaces that are too small for an operator to get out of the means of transport.

### Background Art

Owning and using an automobile is now an essential part of life in the West and elsewhere, thanks to considerable economic progress since the Second World War which has radically changed methods of transport.

Before the Second World War people mainly got around by bicycle, especially in rural areas, or in rare cases by motorcycle, which often had a sidecar. Only a small number of people owned early automobiles.

The advent of mass production in the automobile industry after the war made it possible for all middle-class families to purchase a car, radically changing the lifestyle of society as a whole in just a few decades.

The availability of one or more cars for personal use then spread beyond the confines of the West and in recent years has also reached developing countries, following the same pattern already seen in Europe and America in the '50s and '60s.

However, the advent of mobility as we know it today has not been accompanied by sufficient awareness of other aspects - not always positive - related to individual freedom of movement. First and foremost internal combustion engines using fossil fuels have contributed, and are still contributing, to a large amount of harmful emissions and carbon dioxide in the atmosphere. Harmful substances such as carbon monoxide, nitrogen oxides, unburned hydrocarbons and carbon particulate (PMx) etc. have a significant impact on human health in the form of a toxic aerosol that is difficult to avoid in everyday activities. The real effects of this mix of substances on health are often hard to identify individually and are widely underestimated.

Scientifically, carbon dioxide emissions have been inextricably linked to global climate change, which we are currently unable to adapt to quickly.

Due to the aforementioned reasons, and general issues with using fossil fuels to power our complex system of industrial life, travelling by car is undergoing a major paradigm shift, introducing electrification and the production of energy using renewable sources and fuel cells.

Assuming that in a few decades travelling by car will have considerably less impact on health and the environment, another problem will remain in relation to overpopulation and the expansion of urban areas.

The use of a car, or several cars, requires there to be a suitable physical location where vehicles can be parked safely. For many users owning a car also means owning a suitable place where it can be kept. Having a garage or parking space is often a highly sought-after asset, but this is often at odds with the availability of dedicated infrastructure, especially in medium-sized and large cities.

Obviously the area of a garage should be as small as possible to accommodate one or more vehicles; but a door must be opened to get in and out of a car, which significantly increases the space requirements in the intended parking location.

In terms of design, there would be considerable benefits if the area designated for building a garage was restricted to the actual space occupied by the outline of a vehicle for the following reasons:
a. space would be saved in the construction of buildings or similar prefabricated structures, and this space could be used for housing or creative purposes,
b. it would be possible to repurpose small areas already available in existing buildings for parking vehicles, areas which are currently unusable due to the impossibility of easily getting out of a vehicle door.

To address space issues in closed parking areas, specific mobile mechanical structures positioned on wheels that rest on the ground have been devised in the prior art. These structures can move parallel to the ground and be placed inside or outside of a garage, along a straight line that intercepts the door.

Once the structure has moved outside of the garage the vehicle can be parked on it and moved inside, enabling it to be positioned under cover without someone driving it.

The systems in the prior art with this design are assisted by suitable mechanical and electronic technology, more specifically:
a. the mechanical structure is moved by one or more electric motors whose driving force is transferred to the wheels on the mobile mechanical structure, which roll along the ground enabling it to be moved,
b. the operator commands for moving the mechanical structure are via radio control, communicating with a control unit installed on the structure or in the garage,
c. sensors are fitted to the mechanical structure and in the garage to ensure that it is moved with the maximum safety.

For example, international application EP2491204B1 illustrates electromechanical equipment to help with parking a vehicle in a garage. The equipment has a pair of platforms with their drive wheels placed on the ground, and one of them has an electric motor with a gear unit and a clutch. The motor powers a rotating shaft which is connected to two or more wheels on the platforms and makes them move. The straight line of the platform motion is controlled via runners placed on the ground in the garage. There are also electronic devices to control the platform motion and ensure it is safe.

International application EP2491204B1 also illustrates that the wheels which must be positioned on the platform are those solely on a crosswise vehicle axle e.g. the rear wheels, as this is enough to apply the traction on the vehicle's remaining wheels to move it effectively.

Application EP2491204B1 appears to be extremely efficient and practical for its purpose, however some technical aspects could be improved:
a. first of all, the grip coefficient of the platform drive wheels on the ground must be sufficient, as it is the rotation of these wheels, generated by a rotating shaft connected to the electric motor, which enables the movement of the platform while supporting the crosswise axis of a vehicle. It can quickly be demonstrated that the grip coefficient of the platform on the ground is not always ideal, especially in a garage, as the ground may be oily, wet or even be without proper flooring, a factor found in many closed spaces that are used for general purposes,
b. secondly, the garage floor must be fairly level and even, as a slope would drastically change the grip of the platform wheels on it,
c. thirdly, as the platform has drive wheels, if a platform wheel unit slips even slightly with respect to another it could result in non-linear motion. For this reason, EP2491204B1 includes specific U-shaped runners on which the platform wheels operate to control the motion. This solution increases the size of the automatic parking equipment and entails the use of additional elements i.e. the U runners, and could be simplified,
d. fourthly, the presence of a rotating motor shaft that powers the platform wheels represents a technical complication, as a transmission shaft requires additional runners and bearings to operate properly.

The evident use of small wheels in EP2491204B1 further complicates their drive function. Finally, it can be noted that the necessary specialist features of the device illustrated in EP2491204B1 restrict the use of the garage in which it is installed to solely four-wheeled vehicles.

These specialist features mean that the benefits of having a closed garage to protect a vehicle from the weather, vandalism or theft is unusable for other vehicles, such as small boats, trailers, jet skis etc. as the ground installation of the equipment in EP2491204B1 is fixed i.e. it cannot be moved quickly depending on the use of the garage. Application CN108590266 also illustrates parking equipment with a mobile platform for vehicles, however its mechanical and transportation layout is very complex. Application US2007207015A1 illustrates equipment for moving and berthing boats, which does not however have characteristics that comply with wheeled vehicles. Finally, application US2017350151A1 illustrates parking equipment for vehicles with mobile platforms that has improved features in terms of reduction in size and practical aspects of the ground installation.

Further to the information already stated, the aim of this Invention is to create parking equipment for any kind of two or four-wheeled vehicle, a small boat or jet ski etc. such as to be able to use small areas which are very restricted.

Another aim of this Invention is to create a platform motion control system that can support the vehicle irrespective of ground conditions or slopes.

Another aim of this Invention is to devise its layout such that it can be configured on the basis of the vehicle to be accommodated.

### Summary of Invention

The Invention consists of innovative automatic equipment for parking various means of transport in a garage, such as four or two-wheeled vehicles, a small boat or a jet ski, which beneficially uses a traction element that differs from systems with drive wheels on the ground. The Invention guarantees that the parking system is functional and adaptable to any closed space, even when there is no flooring or the ground is sloping.

### Advantageous Effects of Invention

The benefits of this Invention are specified below:
a. The Invention enables the effective movement not only of cars or four-wheeled vehicles in general, but also motorcycles, bicycles, trailers, jet skis and small boats,
b. The Invention is capable of optimal operation even on sloping ground,
c. The Invention can also be installed in rooms with no flooring on the ground,
d. The Invention requires minimum maintenance thanks to the features of the electromechanical layout,
e. With its simplified design, the Invention does not require a specialist operator to change the configuration required to adapt it to the vehicle to be parked.

### Brief Description of Drawings

The table with diagrams is included with the documentation for this application to illustrate the characteristics of the invention, with application variations highlighted where described. More specifically it includes:
**Fig.1**

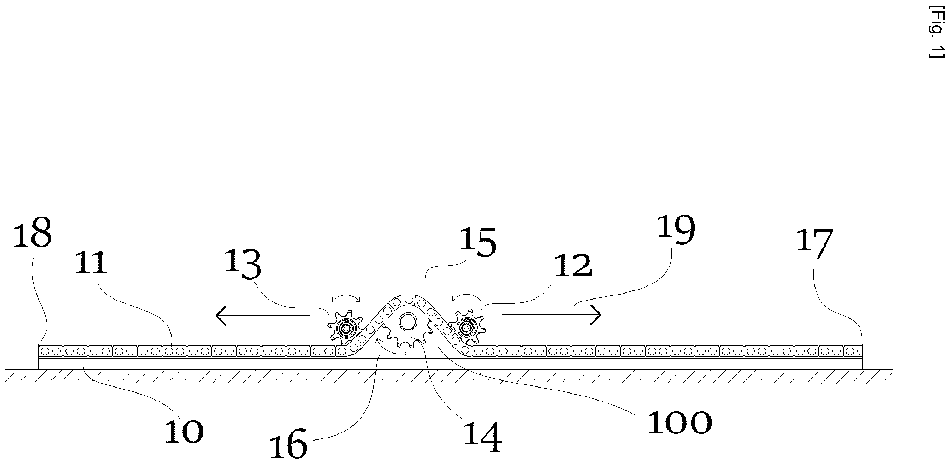

   [fig.1] illustrating a guided chain unit as per the idea of the Invention, consisting of a chain section and the relevant ground fitting,
**Fig.2**

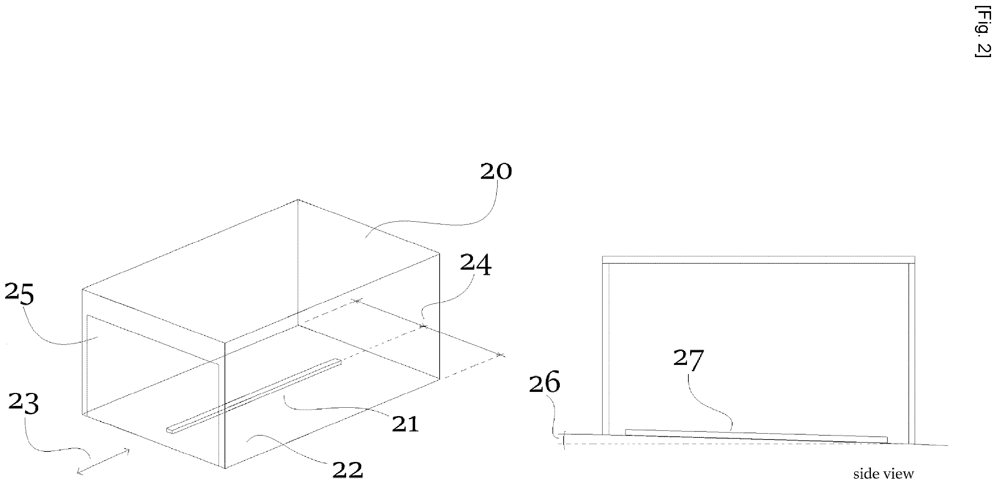

   [fig.2] illustrating the position of the chain fitting in a garage, as per the idea of the Invention,
**Fig.3**

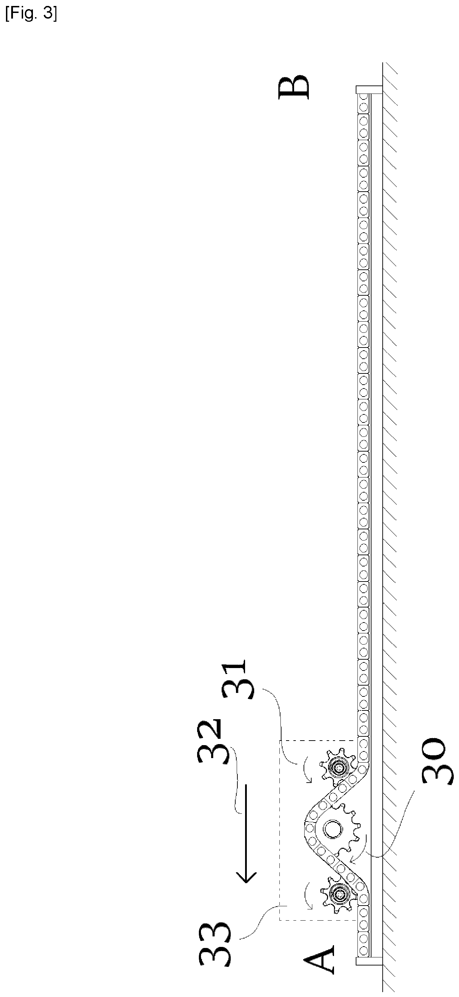

   [fig.3] illustrating the movement of the drive device thanks to the rotation of the sprocket on the chain, as per the idea of the Invention,
**Fig.4**

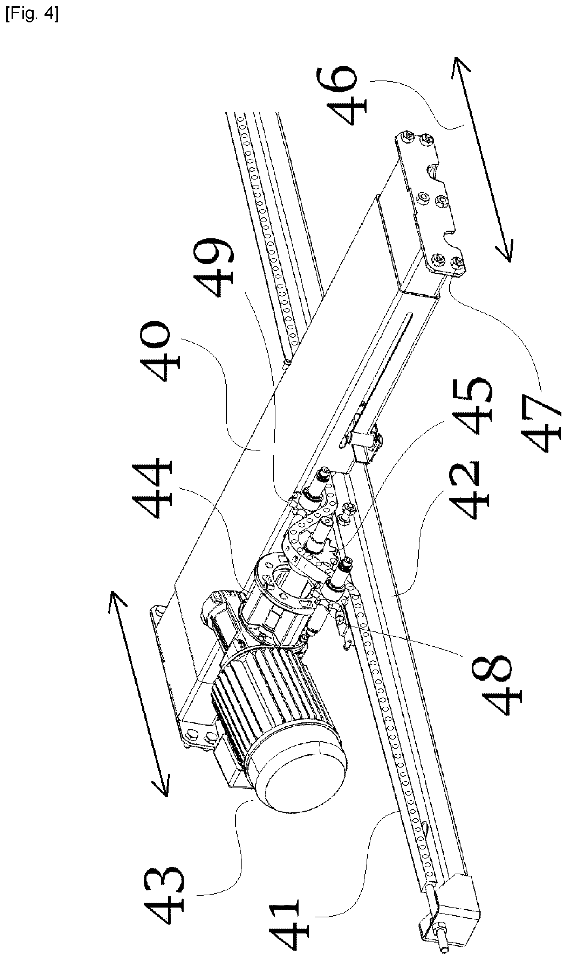

   [fig.4] illustrating detail of the blocks forming the drive device, as per the idea of the Invention,
**Fig.5**

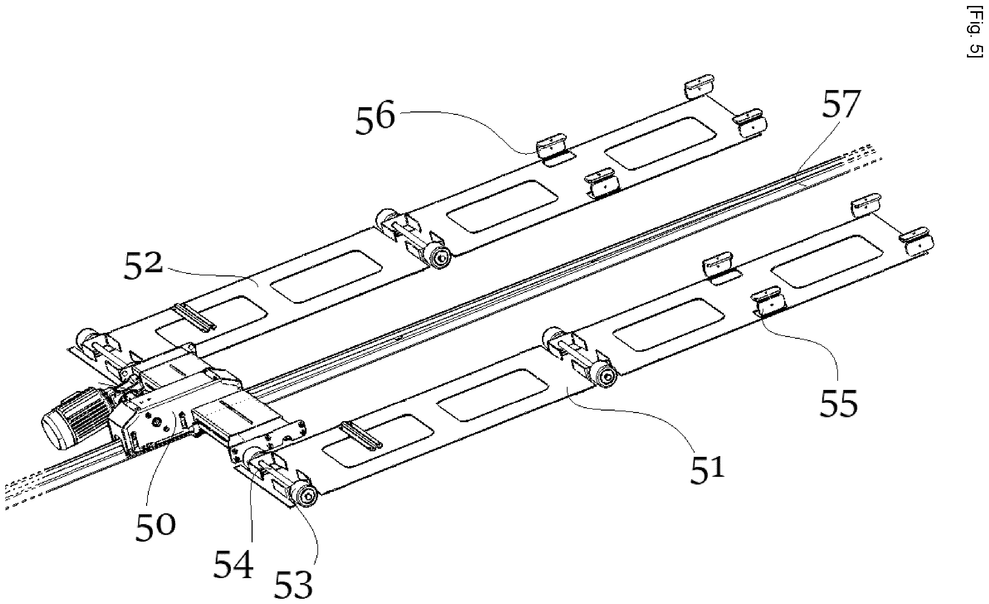

   [fig.5] illustrating the extended metal ground support structure forming part of the innovative equipment in this Invention,
**Fig.6**

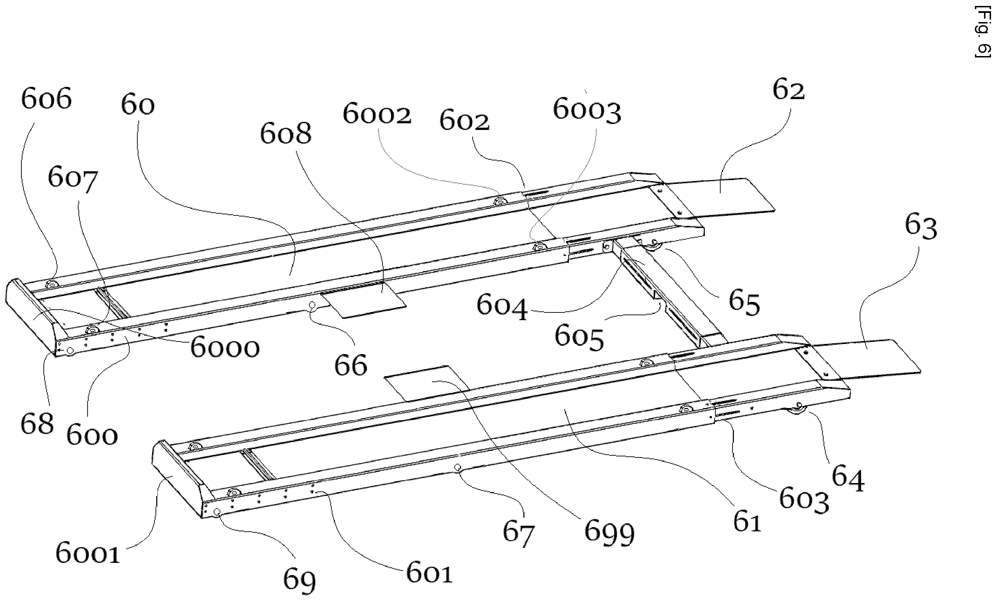

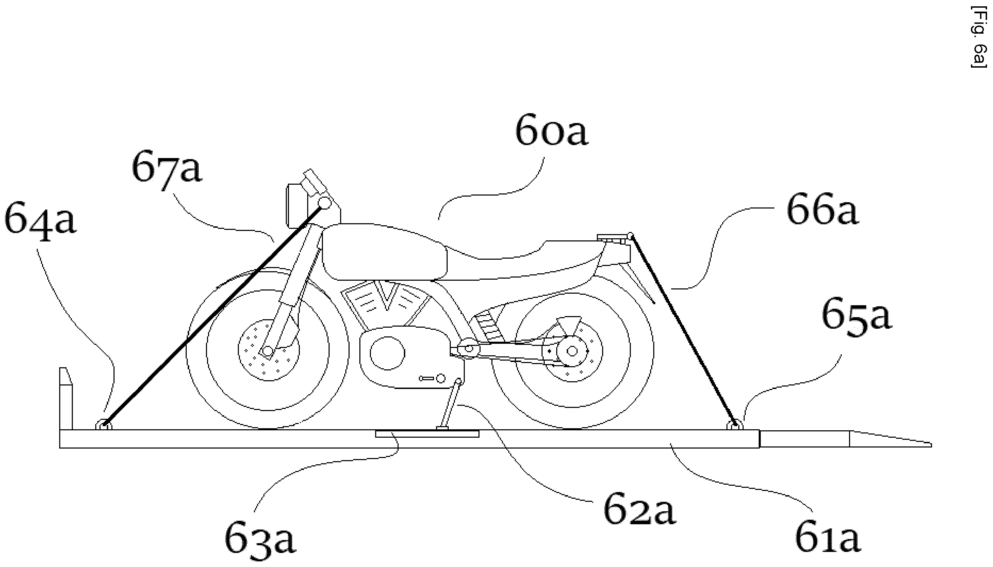

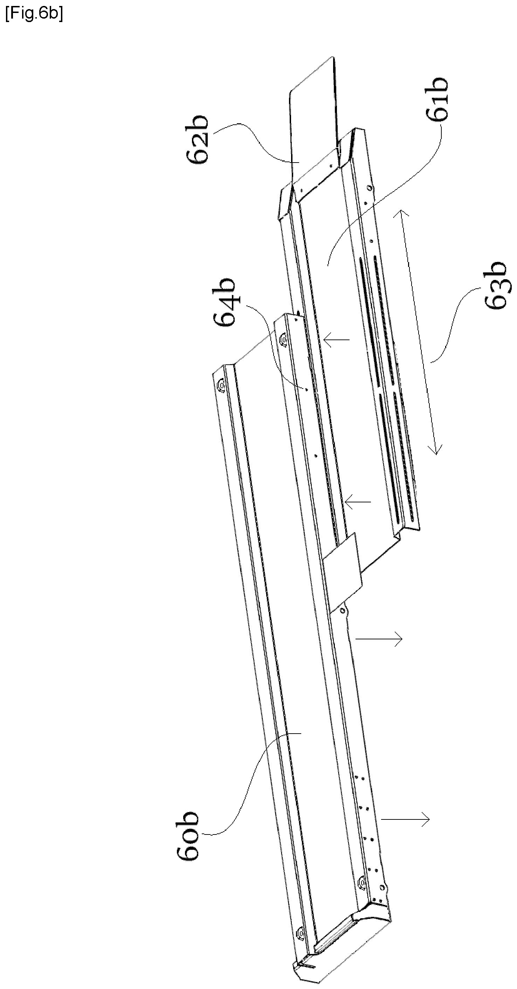

   [fig.6] illustrating an initial parking slot forming part of the innovative equipment in this Invention,
**Fig.6a**
   [fig.6a] illustrating the parking procedure for a two-wheeled vehicle on the innovative equipment in this Invention,
**Fig.6b**
   [fig.6b] illustrating the detail of two elements that create a platform of a parking slot forming part of the innovative equipment in this Invention,
**Fig.7**

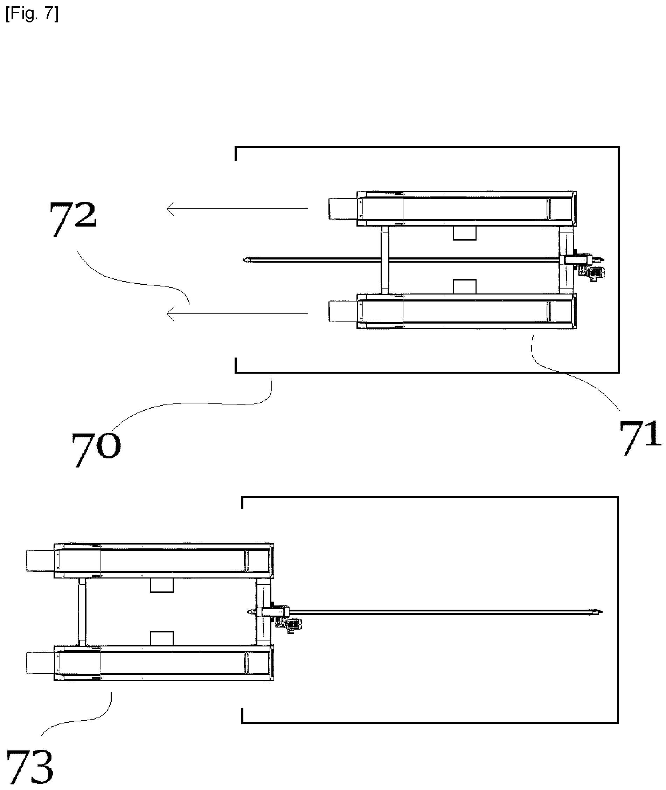

   [fig.7] illustrating a clear overhead view of the innovative equipment in this Invention installed in a garage,
**Fig.8**

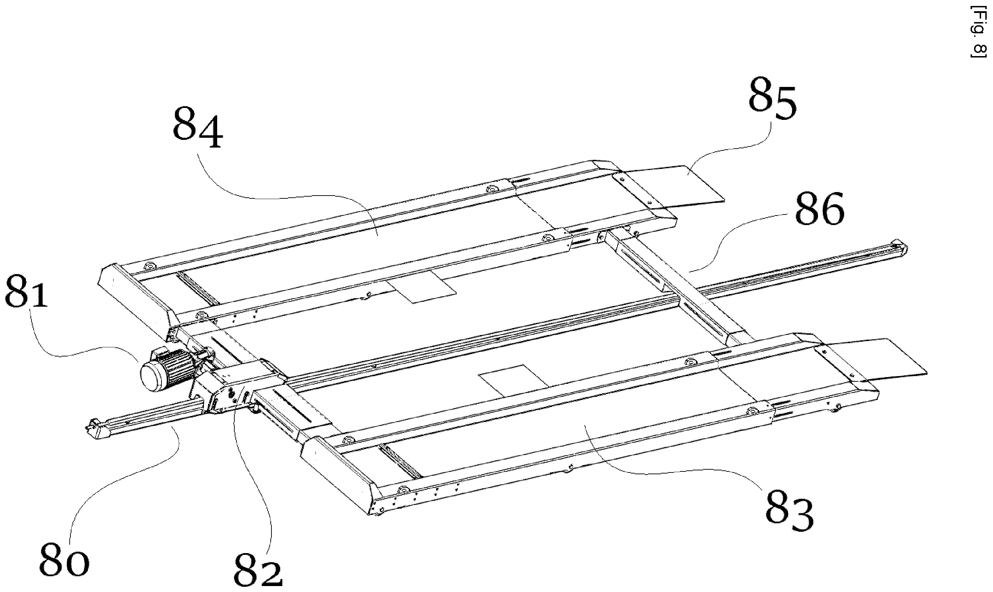

   [fig.8] illustrating a view of the entire innovative equipment in this Invention in an initial configuration,
**Fig.9**

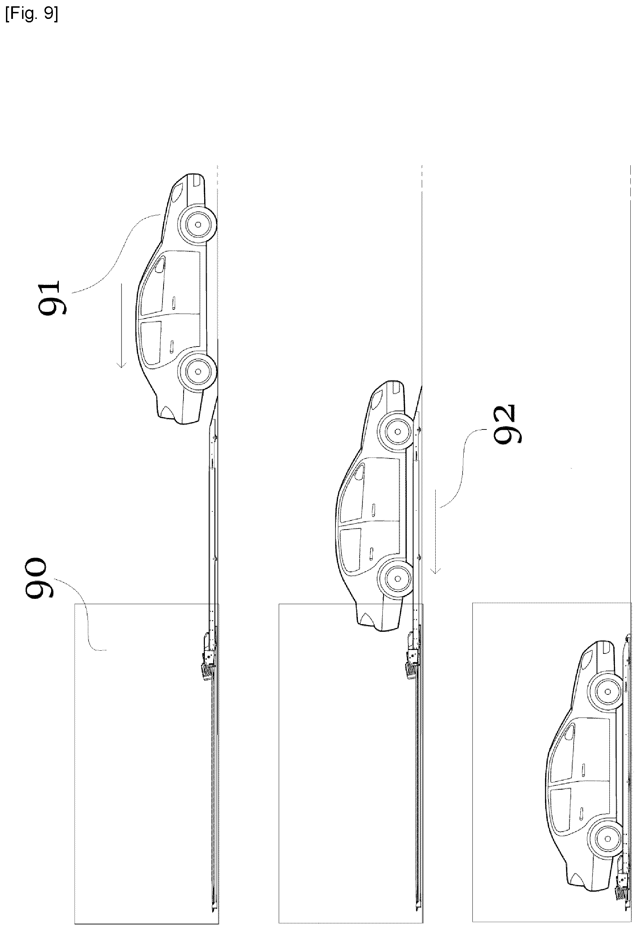

   [fig.9] illustrating a clear side view of vehicle parking operations using an initial configuration of the innovative equipment in this Invention,
**Fig.10**

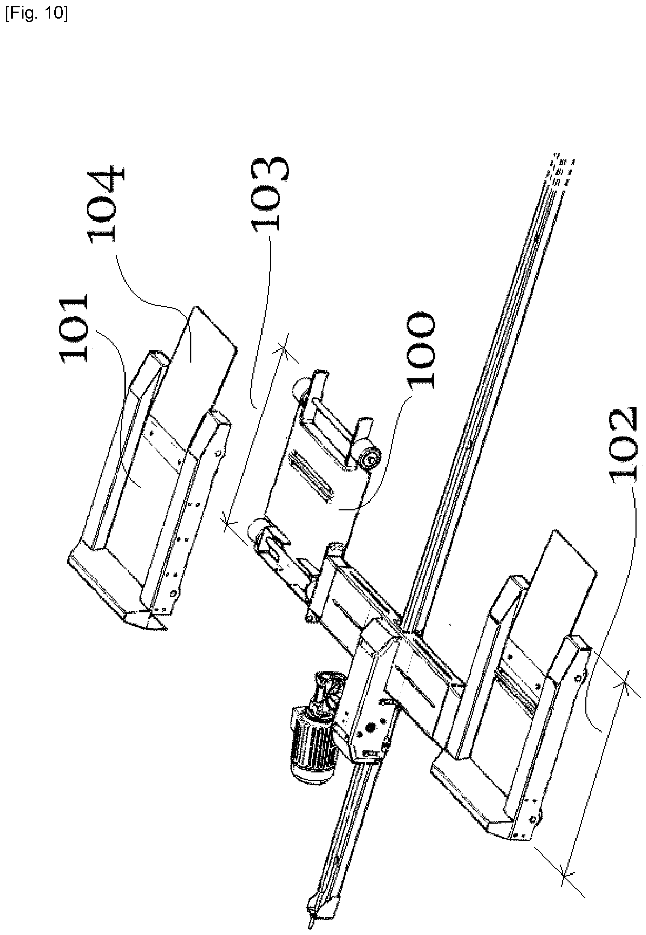

   [fig.10] illustrating the innovative equipment in this Invention with a reduced ground support structure and a second parking slot, together forming a second configuration of the innovative equipment,
**Fig.11**

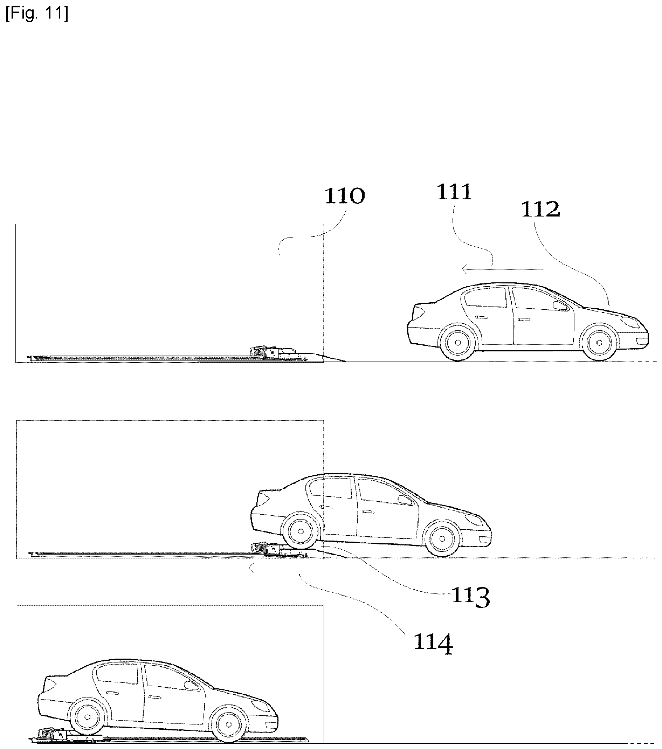

   [fig.11] illustrating a clear side view of vehicle parking operations using a second configuration of the innovative equipment in this Invention,
**Fig.12**

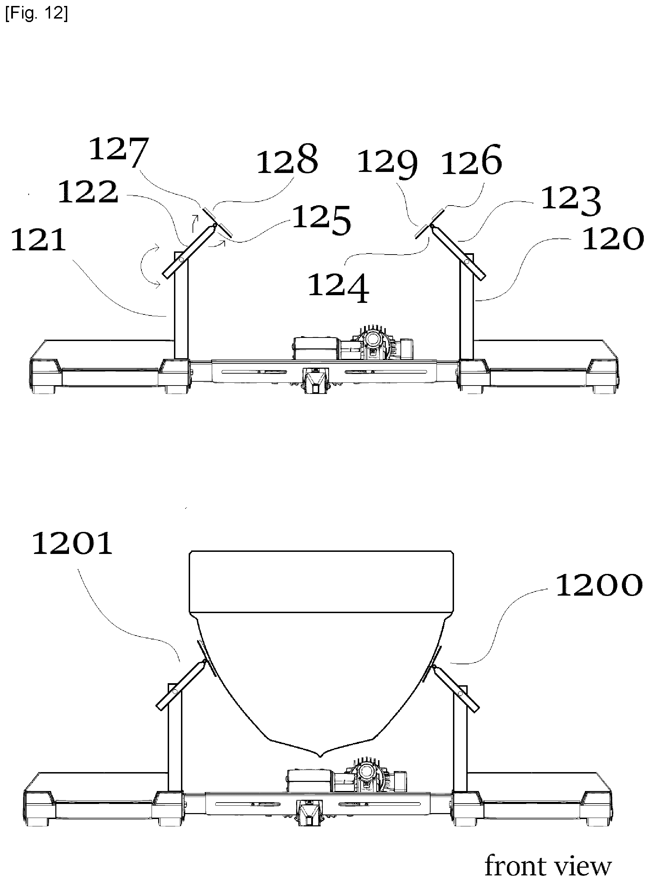

   [fig.12] illustrating the innovative equipment in this Invention with an extended ground support structure and a third parking slot, together forming a third configuration of the innovative equipment,
**Fig. 13**

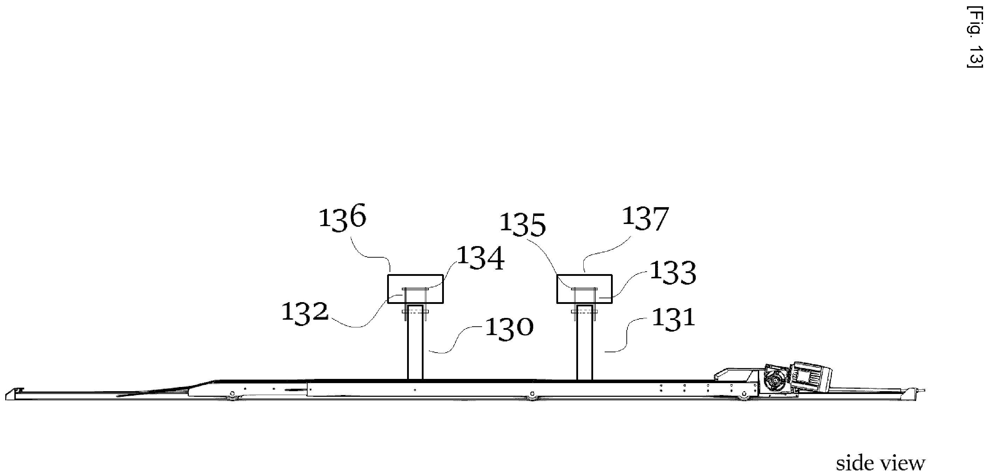

   [fig.13] illustrating a side view of the innovative equipment in this Invention arranged in a third configuration,
**Fig. 14**

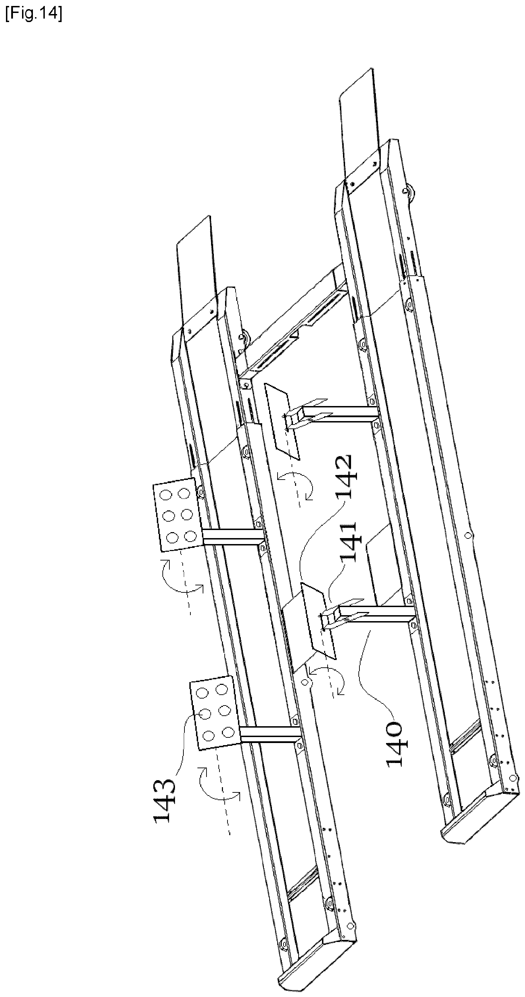

   [fig.14] illustrating an axonometric view of the innovative equipment in this Invention arranged in a third configuration,
**Fig. 15**

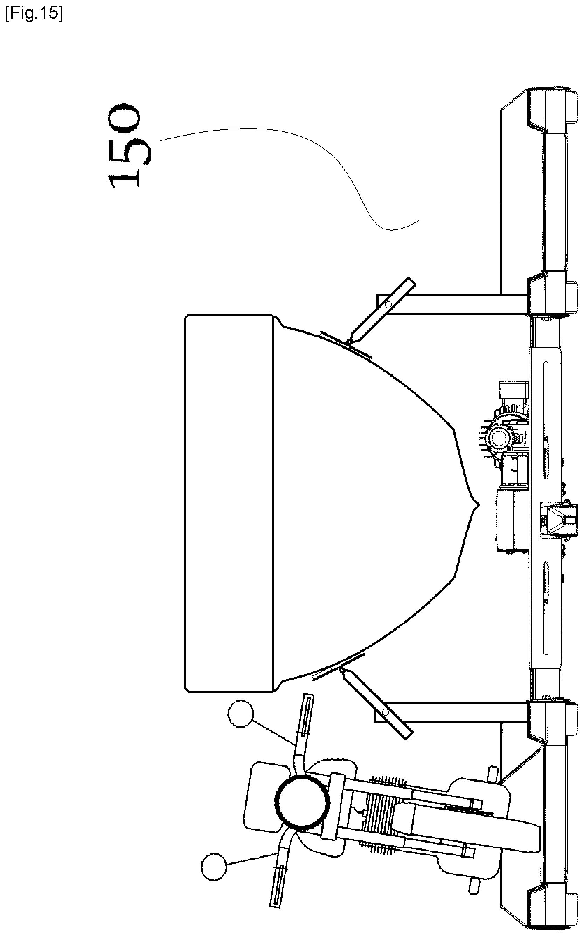

   [fig.15] illustrating an example of the parking procedure for a small boat and a motorcycle using the innovative equipment in this Invention arranged in a third configuration,
**Fig. 16**

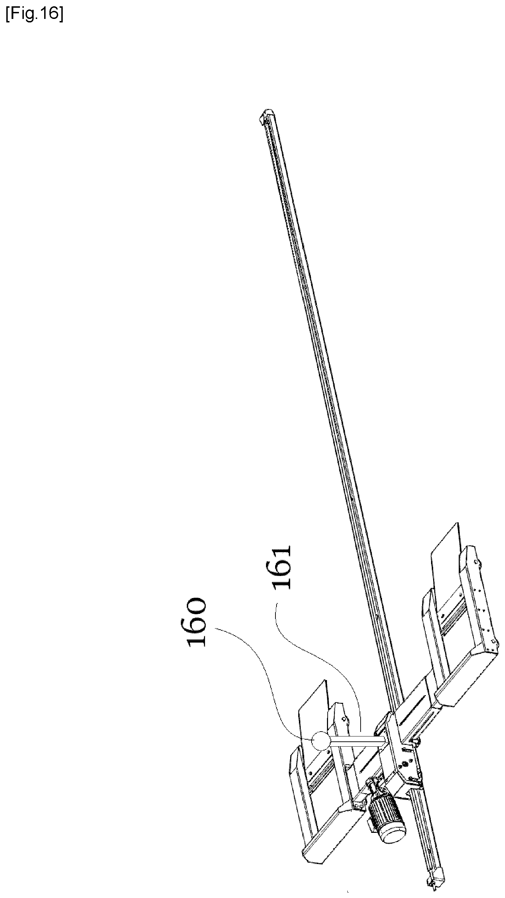

   [fig.16] illustrating an axonometric view of another type of implementation of the innovative equipment capable of handling a trailer, as per the idea of the Invention,
**Fig. 17**

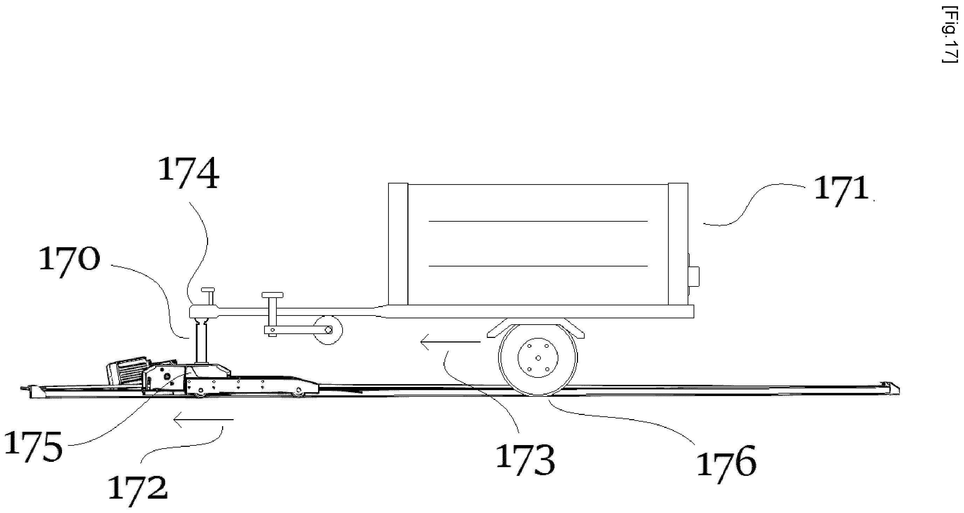

   [fig.17] illustrating a side view of the innovative equipment arranged with a parking slot to support a vehicle wheel axle when used with a trailer, as per the idea of the Invention,
**Fig. 18**

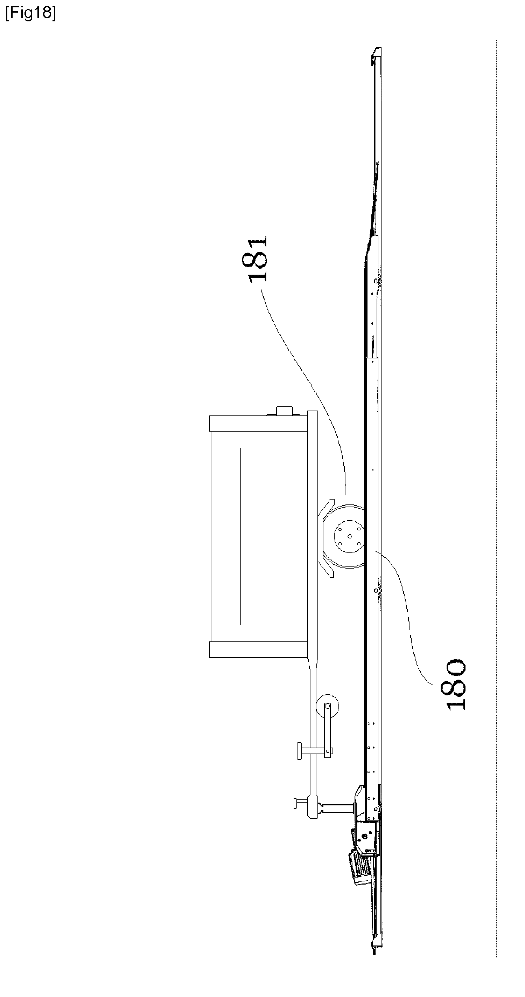

   [fig.18] illustrating a side view of the innovative equipment arranged with a parking slot to support two vehicle wheel axles when used with a trailer, as per the idea of the Invention.

### Description of the Invention

The description of the various methods for implementing this Invention is outlined for illustration purposes, therefore all possible modifications of an obvious nature in its field of application, when carried out by industry operators, will not limit the licence protection terms.

The equipment described in this Invention relates to additional solutions already known in the prior art which are referred to for correct implementation in the chosen technical environment.

In the wording of this Invention, reference to an individual technical element may also apply to multiple instances of it in the Invention, unless stated otherwise.

As per the Invention implementation method, the automatic parking equipment can be described in four electromechanical macro-units:
a. a device installed in the garage named the guided chain unit which includes a ground fitting,
b. a drive device operating the guided chain, equipped with an electric motor and mechanical elements connecting to other sections of the innovative equipment,
c. a multi-purpose platform joined to the drive device equipped with towing wheels,
d. an automated parking equipment control system with a control unit to handle each automatic function.

The guided chain unit consists of a ground fitting (10) which extends longitudinally and forms a base for securing the ends of a section of chain (11) designed to be engaged by one or more sprocket wheels (12). As clearly illustrated in Fig.2, the fitting (21) is installed in a garage (20) that must be set up with the automatic parking equipment in this Invention to enable the vehicle being parked to pass through the entrance (25) automatically.

The chain fitting (21) is secured to the ground (22) at the mid-point of the garage width (24) i.e. in a central position along the garage entry-exit direction (23).

As per the Invention implementation method, and unlike the prior art concerning other parking devices, it is not necessary for the garage floor to be perfectly flat, and it is acceptable for there to be an up or downhill slope (26) on which the ground chain fitting is secured (27).

As per the Invention implementation method, the chain is installed on the fitting such that it is engaged by three specific cogs; the cog rotation will generate horizontal motion used by the automatic parking equipment in this Invention to move via the control logic.

As per the Invention implementation method, and as illustrated in Fig.1, a sprocket (14) is engaged in the space (100) between the chain (11) and the chain fitting (10). The aim of this sprocket engagement is for it to move by rotating along the chain (16) in both possible directions. With the engaged chain secured at the respective ends to the ground fitting (17,18), the sprocket rotation has no effect on the position of the aforementioned chain as it is immobilised, enabling solely the movement of the rotating sprocket along a horizontal axis determined by the position of the chain ground fitting.

As per the Invention implementation method, the sprocket is part of a mechanism joined to the body of the drive device (15), which will be described further on in this Description of the Invention. This device will therefore undergo translational motion from the rotation of the aforementioned sprocket (19).

As per the Invention implementation method, in order to enable the sprocket to be engaged by the chain properly and to prevent its detrimental derailment, two rotating guide pinions (12,13) are joined to the drive device and positioned at the sides of the sprocket above the chain i.e. outside the space in which the aforementioned sprocket operates. Sprocket rotation is therefore accompanied by the rotation of the two guide pinions, which ensure stable chain position because they are generating tension between the chain and the sprocket.

Fig.3 illustrates how the clockwise rotation (30) of the sprocket, with the resulting anticlockwise rotation of the two guide pinions (31), enables the drive device (33) to move (32), for example towards stopping point A.

As per the Invention implementation method, the guided chain unit alongside the drive device with its sprocket and guide pinions form the motion control system for the aforementioned drive device, and everything in the Invention connected to it, independent of the rotation of one or more drive wheels on the multi-purpose platform on the ground, as illustrated in EP2491204B1, and is therefore immune to the following factors:
a. poor grip of the drive wheels on the ground due to it being damp, wet or oily,
b. poor grip of the drive wheels on the ground due to it sloping,
c. poor grip of the drive wheels on the ground due to it not being completely smooth and/or even.

As per the Invention implementation method, the section of chain that forms part of the guided chain unit can conveniently be replaced by a flexible cogged belt. Transmission belts usually consist of intertwined synthetic fibres and reinforcement fibres, sometimes made of metal, incorporated into a mix of additional materials, such as vulcanised rubber and PTFE. They are used in many fields of application and offer the benefits of requiring minimal maintenance, and being quiet when in use compared with metal chain solutions.

As per the Invention implementation method, using the flexible cogged belt in the guided chain unit entails replacing the sprocket and guide pinions with suitable pinions and a chain ring with teeth that are compatible with those of the flexible cogged belt.

Fig.4 illustrates the detail of the drive device. It mainly consists of an extendable segment (40) in a position orthogonal to the chain section (41) and its ground fitting (42), with the aforementioned extendable segment being made of metal and suitably rigid. The drive device has an electric motor (43) with a suitable speed adaptation mechanism, also known in the prior art as a gear unit (44). The rotating motion of the electric motor's rotating shaft through the gear unit reaches the sprocket (45), which rotates due to the movement generated by the electric motor and enables the entire drive device to move along the direction of the guided chain unit (46). The electric motor, the gear unit, the sprocket and the guide pinions are all connected to the metal crosswise segment.

As per the Invention implementation method, the drive device has appropriate fittings (47) at the end of its extendable axis for the connection and movement of the actual multi-purpose platform on which a vehicle can be placed. The platform has an optimised layout and relieves the ground of the weight of the aforementioned vehicle, thanks to non-drive wheel units, as the drive power operating on the automatic parking equipment is provided by the mechanical interaction between the guided chain unit and the drive device, as already stated in the previous sections.

As per the Invention implementation method and as illustrated in Fig. 5, the unit consisting of the sprocket and the guide pinions is protected by an outer metal casing (50) to prevent the deposit of dust or contaminants, and it is suitably rigid to enable use in other implementations of the Invention as described below.

As per the Invention implementation method, the multi-purpose platform has two elements:
a. a metal ground support structure which spans a longitudinal axis parallel to the guided chain ground fitting. It consists of two rectangular metal profiles (51, 52) placed to the right and left respectively of the guided chain ground fitting (57). This structure has ground contact via two pairs of towing wheels fitted on each metal profile (53), with each pair of wheels joined to its own axle (54) connected to the metal profiles using rotating bearings. Each rectangular metal profile is equipped with mechanical fittings (55, 56) attached using screws and nuts on a metal parking slot above, as specified further on in the Description. The metal support structure can be made in two versions:
   i. with the length equal to or greater than the wheelbase of a four-wheeled vehicle or the entire length of a vehicle to be parked, with the aforementioned structured called the 'extended version',
   ii. with sufficient length to accommodate part of the entire vehicle size, supporting just one wheel axle, with the aforementioned structure called the 'reduced version'.
b. a metal parking slot for items and/or vehicles to be stored in a garage i.e. usable surface on which such items and/or vehicles can be placed. The metal parking slot also spans along the direction of the guided chain fitting and is made to be joined to the mechanical fittings on the rectangular metal profiles of the metal ground structure using screws and nuts.

As per an initial Invention implementation method, three mechanical parking slots are created:
a. a first slot ideally for parking bicycles, mopeds, motor cycles and cars, the latter when equipped with four-wheel drive and/or electric and/or automatic transmission, whereby the length of the aforementioned slot can accommodate the whole size of the vehicle providing support for both wheel axles. The aforementioned slot is coupled to an extended metal ground support structure,
b. a second slot ideally for parking two-wheeled motor vehicles with manual transmission, whereby the length of the aforementioned slot can accommodate part of the vehicle size supporting just one wheel axle. The aforementioned slot is coupled to a reduced metal ground support structure,
c. a third slot for storing small boats or jet skis. The aforementioned slot is coupled to an extended metal ground support structure.

As per the Invention implementation method, the first mechanical parking slot consists of two rectangular platforms (60, 61) with a perimeter corresponding to the profiles of the extended metal ground support structure (51, 52) and the respective mechanical fittings (55, 56). The platforms are joined securely to the aforementioned profiles and fittings with screws and nuts once positioned above them. In the Invention the rectangular platforms span in a horizontal position parallel to the ground line.

As per the Invention implementation method, each of the two rectangular platforms of the first mechanical slot have two towing wheels placed on the ground (64, 65) at the first end of the two platforms. This first end has two respective access ramps (62, 63) to enable a wheeled vehicle to be put on the first mechanical parking slot,

As per the Invention implementation method, the second end of the two rectangular platforms is set up with two respective stop partitions (6000, 6001) for the wheels of the parked vehicle,

As per the Invention implementation method, each of the two rectangular platforms of the first mechanical parking slot is set up with perforations (66, 67, 68, 69) for connecting the axles and towing wheels (53, 54) on the aforementioned extended metal ground support structure after positioning it above its profiles (51, 52), as stated in section [0056].

As per the Invention implementation method, each rectangular platform consists of two complementary sections, an upper section (60b) and a lower section (61b) leading to an access ramp (62b). The two platform sections join one over the other (63b), such that the overall length can be changed by sliding them into position and securing them with retaining nuts and screws (64b). Fig.6 shows part of the rectangular platform with the mutually-sliding overlapping sections (602, 603).

As per the Invention implementation method, the two rectangular platforms of the first mechanical parking slot are mutually interconnected via a rigid crossbar (604) positioned at the access ramps. This bar has a centre opening (605) for placing it over the guided chain unit and the corresponding ground fitting, therefore without interfering with the chain section and corresponding fitting.

As per the Invention implementation method, each rectangular platform of the first mechanical parking slot has four side anchoring points at its ends, arranged in pairs (606, 607, 6002, 6003). Each platform also has a supporting surface in the middle section external to the platform area, and these surfaces are opposite each other (608, 699) and stretch towards the guided chain ground fitting. These particular setups make it possible to park a cycle or motorcycle (60a) with the aid of the side stand (62a) on the relevant support surface (63a) of the rectangular platform (61a), using ropes and/or ties (66a, 67a) secured to the respective anchoring points (64a, 65a).

As per the Invention implementation method, the reciprocal connection between the first parking slot (Fig.6), the extended metal support structure (Fig.5) and the drive device (Fig.4) is implemented with suitable setups at the two vertical stop partitions on the rectangular platforms, in the form of perforations (600,601) for screws and retaining nuts to ensure a solid connection to the extendable segment of the drive device (40) equipped with suitable fittings (47). This connection firmly and solidly secures:
a. the first parking slot,
b. the extended metal ground support structure,
c. the drive device.

As per the Invention implementation method, each movement of the drive device is therefore affected by the rotation of the sprocket on the guided chain unit, and is affected by the latter on the multi-purpose platform via the extendable axle i.e. the extended metal support structure connected to the first parking slot. The movement will enable all towing wheels in the Invention to turn on the ground and vertically offload the weight of the vehicles parked on it. The drive device will move along the entire length of the guided chain unit and the ground support, pulling the multi-purpose platform, consisting of the extended metal ground support structure and the parking slot, along with it parallel to the ground.

As per the Invention implementation method, and unlike solutions in the prior art, the towing wheels do not require a minimum grip coefficient, and the ground does not have to be completely level as they do not perform the function of drive wheels, as in EP2491204B1 for example. This means work to ensure perfect flooring is not required in the garage in which the innovative equipment in the Invention is to be installed, and the ground does not need to be cleaned to ensure it is not wet or oily, which would compromise traction of the drive wheels in EP2491204B1.

Fig.7 illustrates a clear overhead view of a garage (70) in which the innovative equipment in this Invention is installed (71). Using the electronic controls on the innovative equipment, which are described below, the multi-purpose platform moves along the direction of the guided chain unit and its fitting thanks to the action of the drive device acting on it, bringing the aforementioned platform outside of the garage (72) where it can accommodate a vehicle on its platforms that is to be stored in the garage.

Fig.8 shows an axonometric view of the innovative equipment in this Invention when complete with the first parking slot, illustrating:
a. the guided chain unit (80)
b. the drive device with the electric motor (81) and the sprocket unit with the guide pinions protected with casing (82),
c. the multi-purpose platform consisting of the first parking slot connected to the extended metal ground support structure, with the aforementioned slot set up with two rectangular platforms (83,84) joined by a rigid crossbar (86), and complete with respective access ramps (85).

Fig. 9 shows a clear side view of the innovative equipment in this Invention set up with the first parking slot and the extended metal ground support structure installed in a garage (90), illustrating a vehicle (91) correctly positioned on the respective platforms and then moved (92) into the aforementioned garage.

As stated in this description of the Invention, the first parking slot is suitable for parking bicycles, mopeds, motor cycles and cars, with the latter equipped with four-wheel drive, automatic or electric transmission. In practice these four-wheel drive vehicles often need to be positioned with all four wheels over the aforementioned slot, as often the two rear or front axles are unable to turn when the vehicle is switched off and the handbrake is released.

Another Invention implementation method is available for all two-wheel drive vehicles with manual transmission that have a wheel axle that is free to rotate with the vehicle switched off i.e. a second parking slot and a reduced metal ground support structure, forming together the multi-purpose platform.

As per the further Invention implementation method [Fig.10], the reduced ground support structure (100) is similar to the extended version described in the previous sections, however it is shorter in length (103), as in the second parking slot (102), which is sufficient for accommodating a support platform (101) to carry only one vehicle axle (such as the rear axle). As with the first parking slot, the second parking slot also has access ramps to the respective platforms (104).

As per the further Invention implementation method, the second slot is also similar to the first parking slot, however it cannot be extended therefore is without two complementary sections creating the platform. The platforms of the second parking slot respectively consist of one metal element designed to accommodate only the wheels of a single vehicle axle; moreover, the aforementioned slot:
a. does not have side anchoring points, as it is not possible to accommodate a two-wheeled vehicle on the second parking slot,
b. does not have the two supporting surfaces in the middle section, as it is not possible to accommodate a two-wheeled vehicle on the second parking slot,
c. does not have towing wheels as the wheels of the reduced ground support structure on which it is connected are being used, and this is sufficient due to the shorter length of both.

As per the further Invention implementation method, the same mechanical assembly procedures described for the first parking slot and the extended ground support structure apply to the second parking slot and the reduced ground support structure, including the drive device.

Fig.11 shows a procedure for parking a two-wheel drive vehicle (112) using the innovative equipment in this Invention with the second parking slot and the reduced ground support structure. The vehicle's rear wheel axle is positioned (111) over the second parking slot (113) and the handbrake for these wheels is engaged. The vehicle transmission is placed in neutral, then the innovative equipment is actioned (114) and positioned in the garage (110), enabling the vehicle to be moved and stored.

As per another Invention implementation method, the third parking slot completely overlaps the first parking slot in terms of size and proportions, but is set up with a mechanical solution to accommodate a small boat or jet ski.

As per the further Invention implementation method, the third parking slot uses an extended ground support structure.

Fig.12 and Fig.13 respectively show a front and side view of the innovative equipment in this Invention when equipped with the third parking slot and corresponding extended ground support structure. The slot is set up with 4 metal towers (120,121,130,131), two on each platform, which are installed at the inner edge of each platform and complete with a swivel control arm (122,123,132,133). Each control arm is connected via a rotating joint (124,125,134,135) to a support plate (126,127,136,137) with pads in a soft material (128,129) such as PTFE, silicone or polyurethane.

As per the further Invention implementation method, the four rotating support plates create a surface to accommodate the keel of a small boat (1200, 1201) or a jet ski, adapting to the profile of the keel thanks to their rotation and the rotation of the respective control arms.

Fig.14 shows an axonometric view of the innovative equipment in this configuration (140), illustrating the four metal towers (140), the four control arms (141) and the four support plates (142) with their respective pads (143).

As per the further Invention implementation method, remarkably the third parking slot connected to the extended ground support structure can accommodate a small boat or jet ski along with a maximum of two vehicles with two wheels, such as bicycles, mopeds or motor cycles, as the area of the two rectangular platforms of the aforementioned slot is not occupied by the volume of the boat, as shown in Fig. 15 (150).

As per the further Invention implementation method, remarkably the third parking slot connected to the extended ground support structure can accommodate a small boat or jet ski along with a maximum of two vehicles with two wheels, such as bicycles, mopeds or motor cycles, as the area of the two rectangular platforms of the aforementioned slot is not occupied by the volume of the boat, as shown in Fig. 15 (150).

As per the further Invention implementation method, it is also possible to configure the drive device with a suitable mechanical connector created by a vertical metal tower (160,161,170) placed on it, which can be attached to the towing bracket (174) of a trailer (171). The metal tower can be used on the innovative equipment when set up with the first parking slot i.e. that which can accommodate both wheel axles of a vehicle, and when set up with the second parking slot i.e. that which can accommodate just one wheel axle.

As per the further Invention implementation method, the metal tower can be attached vertically over the drive device (175) to the casing of the sprocket and guide pinions for example, using mechanical screws, such that it is easy to remove.

As per the further Invention implementation method, the use of the mechanical tower with the second parking slot will enable movement of the trailer by having it proceed (172, 173) with its wheels on the ground (175).

As per the further Invention implementation method, when using the first parking slot (180) however the trailer wheels will rest on the platforms (181); the aforementioned wheels will not therefore be forced to turn during movement of the innovative equipment.

As per the further Invention implementation method, the innovative equipment has a system for controlling the automatic parking functions via an electric control unit with:
a. a control interface for electric and/or electromechanical devices, such as the electric motor in the drive device, the automatic garage doors, warning lights etc.
b. a unit consisting of an AC/DC power switching converter to produce the supply voltages required to power electrical devices,
c. a siren alarm,
d. one or more warning lights,
e. a receiver for one or more radio controls to handle the functions in the Invention,
f. one or more photocells.

As per the invention implementation method, ideally the innovative equipment will be managed via radio control by a user or via a control unit through wireless connection, with the radio control able to call up automatic functions such as:
a. moving the innovative equipment backwards and/or forwards along the guided chain unit,
b. stopping the multi-purpose platform on completion of its range of motion,
c. safety features that prevent the multi-purpose platform from moving past its range of motion.

As per the invention implementation method, electric devices are usually fitted to the mechanical ensemble forming the innovative equipment, but in particular installations some of the aforementioned devices may be installed inside the garage where the innovative equipment is to be placed.

### Examples

None.

### Industrial Applicability

The industrial application of this Invention is an industrial or domestic setting in which cars, motorcycles, bicycles or small boats are to be placed in small spaces where a person would be unable to operate.

### Citation List

Citation List follows: none.

### Patent Literature

PTL1: EP2491204B1
PTL2: CN108590266A
PTL3: US2007207015A1
PTL4: US2017350151A1

### Non-Patent Literature

NPL1: not present.

## Claims

1. Machinery for the automatic parking of four or two-wheel vehicles and/or a small boat or a jet-ski in a garage, installed on the ground plane inside the garage and consisting of:
a. a portion of chain (11) equipped with a ground support (10) that is a group called "guided chain",
b. a driving device (Fig.4) operating on the guided chain (41) equipped with an extensible transversal metal element (40), an electric motor (43), a gearbox (44), two sprockets called "drive sprockets" (48,49) and a ring gear (45) in which the ring gear and the rotating sprockets are inside a metal protecting casing (50),
c. a multifunctional platform consisting of the joining of lower section, called "metal ground support structure" (Fig. 5) and an upper section, called "parking slot" (Fig. 6), said platform serving as a parking area for a means of transport, said platform connected to the driving device and equipped with two rectangular ramp (83,84) and trailed wheels resting on the ground (53,64),
d. a management device for the automatic parking machinery made by electric control unit.

2. Machinery of Claim 1 in which the group of guided chain is made up of:
a. a portion of chain (11) fixed at its ends on a chain support installed on the ground (10) which extends along a longitudinal direction,
b. a chain support (21) fixed on the ground plane of a garage in a median position of the transversal share (24) that is centrally along a direction of entry and exit from said garage (23),
c.

3. Machinery of Claim 1 in which the driving device is made up of:
a. a ring gear (14) engaged on the guided chain in a space (100) between the portion of chain (11) and the ground support (10),
b. the ring gear is fixed on the portion of chain by means of two rotating guide sprockets (12,13) also engaged to the chain and placed on the sides of the ring gear,
c. the two rotating sprockets are upon the portion of chain, that is outside the space in which operates the ring gear and they generate a tensioning factor between the chain and the ring gear,
d. the ring gear (45) is integral with a rotating shaft set in rotation by an electric motor (43) operating through the gear box (44),
e. the electric motor, the gear box, the ring gear, the rotating shaft and the guide sprockets are integral with the extensible metal transversal segment (40) the two ends of which have holes of attachment (47), said segment positioned orthogonally to the group of the guided chain.

4. Machinery of Claim 1 in which the multifunctional platform is made up of:
a. a first metal ground support structure defined as of "extended type" in which:
i. the metal ground support structure of extended type is developed in parallel with the direction of the ground support of the guided chain and is made up of two rectangular metal profiles (51,52) respectively placed on the right and on the left of the ground support of the guided chain (57), said structure is in contact with the ground by means of two pairs of trailed wheels installed in each metal profile (53), said structure has a length equal to or greater than that of the wheelbase of a four-wheel vehicle,
ii. each pair of wheels of the metal ground support structure is integral with its own axis (54), connected by rotating bearings to the metal profiles,
iii. each metal profile is equipped with mechanical coupling (55,56) - by means of screws and tightening nuts - to join with the parking slot,
b. a first parking slot connected upon the metal ground support structure of extended type in which:
i. the parking slot develops parallel to the direction of the ground support of the guided chain and it is made up of two rectangular footboards (60,61) with a complementary perimeter with the profiles of the metal ground support structure, said footboards suitable for holding the wheels of a means of support, said footboards respectively placed on the right and left of the ground support of the guided chain, said footboards have a length equal to or greater than the wheelbase of a four- wheel vehicle,
ii. each rectangular footboard is made up of two complementary sections, an upper one (60b) and a lower one (61b), said sections coupled so that they can slide over each other and able to change the total length of each rectangular footboards,
iii. the two sections of the rectangular footboards are reciprocally connected by screws and retaining nuts (64b),
iv. the rectangular footboards are equipped with two trailed wheels resting on the ground (64,65), said wheels are positioned at the first end of the two footboards, said first end provided with two respective access ramps for the access of a means of transport,
v. a second end of the two rectangular footboards is equipped with two vertical end walls (6000,6001),
vi. the rectangular footboards are provided with perforations (600, 601) near the two vertical end walls for the connection to the extensible metal transverse segment (40) which is part of the driving device,
vii. the two rectangular footboards are reciprocally interconnected by a transverse stiffening bar (604) positioned near the access ramps, said bar equipped with an opening in the middle area (605),
viii. each footboard is equipped with four side anchor points arranged in pair, at the ends of each footboard (606,607,6002,6003),
ix. each footboard is equipped with a support surface placed outside the footboard area, said surfaces facing each other (608,699) toward the area of the ground support of the guided chain.

5. Machinery of Claim 1 in which the part of chain forming part of the group of the guided chain remains fixed on its support while the ring gear moves on it thanks to its own rotation which is imprinted by the electric motor of the driving device.

6. Machinery of Claim 1 in which the rotation of the ring gear on the chain (30) causes the displacement of the driving device and of the multifunctional platform along the direction of the guided chain (32).

7. Machinery of Claim 1 equipped with a second metal ground support structure called of "reduced" type (100) connected with a second parking slot (101) in which:
a. the metal ground support of the reduced type and the second parking slot are long enough (102,103) to accommodate only the wheels of an axle of a vehicle to be parked,
b. the second parking slot is not equipped with side anchor points,
c. the second parking slot is not provided with support surfaces,
d. the second parking slot is not provided with trailed wheels,
e. each footboard of the second parking slot consists of a single metal element (101) each of them terminated by its own access ramp (104).

8. Machinery of Claim 1 equipped with a third parking slot connected with a metal ground support of extended type in which:
a. the length of the footboards of the third parking slot is equal to or greater than the wheelbase of a four-wheel vehicle, similar to the first parking slot,
b. the third parking slot is equipped with four side anchor points (606,607,6002,6003) and with the support surfaces on the footboards (608, 699), similar to the first parking slot,
c. the third parking slot is equipped with four metal turrets (120,121,130,131), two for each footboard and installed on the inner edges of each footboard and each terminated by a transversal swivel cross-arm (122,123,132,133),
d. each transversal swivel arm is connected, with a rotating (124,125,134,135), to a support plate (126,127,136,137) fitted with pads made of Teflon or silicone or polyurethane material.

9. Machinery of Claim 1 equipped with a metal vertical turret (160,161,170) positioned above the driving device (175) suitable for connection with the towing hook (174) of a trailer (171).

10. Machinery of Claim 1 equipped with:
a. an electric control unit for the movement management of the machinery for the automatic parking,
b. a control interface for electrical and/or electromechanical devices,
c. a switching AC/DC-type power converter for the generation of all necessary power supplies to the electrically powered devices,
d. an alarm siren,
e. one or more signals lamp,
f. a receiver for one or more radio controls,
g. one or more photocells.
